# EUROPÄISCHE PATENTSCHRIFT

(11) **EP 0 497 179 B1**
(45) Veröffentlichungstag und Bekanntmachung des Hinweises auf die Patenterteilung: **09.08.1995**
(21) Anmeldenummer: 92100851.2
(22) Anmeldetag: 20.01.1992
(51) Int. Cl.: B09B 1/00, E04B 7/00

(54) **Ortsveränderliche Überdachung für Deponien**
Movable roof for waste dumps
Toit déplaçable pour décharges de déchets

(30) Priorität: 28.01.1991 DE 4102450
(43) Veröffentlichungstag der Anmeldung: 05.08.1992
(73) Patentinhaber: WUE UMWELT-ENGINEERING GmbH, D-47051 Duisburg (DE)
(72) Erfinder: Schlieker, Hans, W-4300 Essen 1 (DE)
(74) Vertreter: Herrmann-Trentepohl, Werner, Dipl.-Ing.

(56) Entgegenhaltungen:
- DE-A- 3 703 936
- DE-A- 3 821 822
- DE-U- 8 911 346
- FR-A- 1 256 340
- US-A- 4 899 400
- US-A- 4 927 317

## Beschreibung

Die Erfindung betrifft eine ortsveränderliche Überdachung für Deponien entsprechend dem Oberbegriff des Anspruchs 1.

Bei Abfalldeponien besteht bekanntlich die Forderung, das Entstehen von Sickerwasser soweit wie möglich zu vermeiden, da das Erfassen, Aufbereiten und Ableiten solchen in aller Regel giftigen Sickerwassers mit hohen Kosten verbunden ist. Abfalldeponien werden daher im allgemeinen mit einer Abdeckung versehen, um das Eindringen von Niederschlägen zu vermeiden. Dabei werden nicht nur fertig aufgefüllte Deponien mit einer endgültigen Abdeckung verschlossen, sondern es werden auch in der Phase des Aufschüttens Überdachungskonstruktionen eingesetzt, um die Niederschläge soweit wie möglich von der Deponieoberfläche fernzuhalten. Solche Überdachungen müssen dabei an die sich laufend ändernde Oberfläche der Deponie angepaßt werden können.

Eine bekannte Überdachungskonstruktion für große Deponien umfaßt eine Trägerkonstruktion aus über die Deponiegrundfläche verteilten Stützen und eine von diesen getragene Dachkonstruktion, die in dem Raster der Stützen entsprechende einzelne Dachfelder unterteilt ist. Bei zunehmender Höhe der Deponie werden die Stützen nach oben verlängert und die Dachkonstruktion, gegebenenfalls mit Hilfe eines Hubschraubers, höher gelagert. Die Deponie bleibt unter der hallenartigen Dachkonstruktion zugänglich, und das Dach verbleibt auch nach abgeschlossener Aufschüttung als ständige Abdeckung (DE-OS 3 703 936). Der für eine solche Überdachungskonstruktion erforderliche hohe Aufwand rechtfertigt sich nur bei Großdeponien und erfordert eine geometrisch regelmäßige, nach Möglichkeit rechteckige Grundrißform der Deponie.

Für kleinere Abfalldeponien mit unregelmäßigem Grundriß ist eine ortsveränderliche Überdachung bekannt, die aus einem die Gesamtbreite der Deponiefläche überspannenden, gewölbten Tragfachwerk besteht, das eine Dachhaut trägt und mit seinen beidseitigen Untergurten auf außerhalb der Deponiebasisabdichtung angeordneten Fundamenten gelagert ist. Zur Anpassung an unterschiedliche Deponienbreiten ist dabei die Spannbreite des Tragfachwerks nach Maßgabe eines Rastermaßes vergrößerbar oder verkleinerbar (DE-OS 3 821 822). Da das tonnenartig gewölbte Tragfachwerk die gesamte Deponiebreite überspannt, muß es ebenfalls sehr aufwendig und schwer ausgebildet sein und erfordert eigene Fundamente. Außerdem ist eine Vergrößerung oder Verkleinerung nur in vorgegebenen Rastermaßen möglich.

Der Erfindung liegt die Aufgabe zugrunde, eine ortsveränderliche Dachkonstruktion anzugeben, die an ungleichmäßige Grundrisse und Oberflächenverhältnisse von Abfalldeponien angepaßt werden kann und keine gesondert vorzubereitenden Fundamente erfordert. Die Überdachung soll dabei ohne großen maschinellen Aufwand, insbesondere ohne schweres Hebezeug, auf- und abzubauen sowie zu transportieren sein.

Die Lösung der Aufgabe besteht entsprechend dem kennzeichnenden Teil des Anspruchs 1 darin, daß die Auflagerträger (1) auf der Oberfläche (5) der geschütteten Deponie flächig auflegbar und ballastierbar sind, und daß die Dachelemente (2) an ihren Auflagerkanten mit den Auflagerträgern (1) verbunden sind.

Die Dachelemente überspannen somit nicht mehr die gesamte Deponiebreite, sondern jeweils nur Reihen von beispielsweise 6 Meter Breite. Sie sind dabei unmittelbar auf der Schüttebene der Deponie aufgelagert, wozu eigene Auflagerträger vorgesehen sind, und benötigen deshalb keine Fundamente an den Deponierändern. Ein Befahren oder Begehen in der Schüttebene im Bereich der erfindungsgemäßen Überdachung ist nicht vorgesehen, jedoch ist beim Einsatz der bevorzugten Auflagerträger ein Zugang von der Oberseite der Überdachung möglich. Soweit die Oberfläche, insbesondere für weitere Aufschüttungen, zugänglich sein muß, läßt sie sich durch Entfernen bzw. Versetzen einer oder mehrerer Reihen von Dachelementen ohne großen Aufwand freilegen.

Vorteilhafte Ausgestaltungen der erfindungsgemäßen Überdachung sind in den Unteransprüchen gekennzeichnet.

Die Dachelemente bestehen zweckmäßig aus mit flexiblem, wasserfestem Material belegten, rechteckigen Profilrahmen, von denen zwei an den Längsseiten miteinander verbunden sind und ein Giebeldach mit einstellbarem Neigungswinkel bilden. Als Auflagerträger sind kastenförmige Hohlkörper vorgesehen, die ein Fließgerinne enthalten und einen Hohlraum zur Aufnahme von Ballast aufweisen, der die erforderliche Auflagelast gewährleistet. Ohne Ballast sind die Auflagerträger schwimmfähig, womit die erfindungsgemäße Überdachung auch auf sandigem Untergrund, auf Klärteichen oder dergleichen eingesetzt werden kann.

Die Fließgerinnen leiten das Niederschlagswasser Ableitungsgerinnen zu, die im Winkel zu den Reihen von Auflagerträgern angeordnet sind und den Zufluß mehrerer Fließgerinne aufnehmen können. Am abflußseitigen Ende eines Ableitungsgerinnes ist mindestens ein Pumpensumpf vorhanden, aus dem das Niederschlagswasser abgepumpt wird, ohne mit dem aufgeschütteten Material der Deponie in Berührung gekommen zu sein.

Die erfindungsgemäße Überdachung kann in vorteilhafter Weise zusätzlich zur Gewinnung von Solarenergie genutzt werden. Dadurch kann die Energieversorgung der Pumpen und weiterer Aggregate zumindest teilweise mit Hilfe von Solarenergie erfolgen. Die Solarzellen können in einfacher Weise mit Hilfe von Tragrahmen auf Profilrahmen der Dachelemente befestigt werden.

Nachfolgend wird die Erfindung anhand von Ausführungsbeispielen unter Bezugnahme auf die Zeichnung näher erläutert.

In der Zeichnung zeigen:
- Fig. 1: den prinzipiellen Aufbau der Überdachung im Querschnitt
- Fig. 2: eine Draufsicht auf die Darstellung von Fig. 1
- Fig. 3: einen Teilschnitt durch ein aufgestelltes Dachelement
- Fig. 4: einen Teilschnitt durch ein zusammengeklapptes Dachelement
- Fig. 5: einen Querschnitt durch einen Auflagerträger
- Fig. 6: zwei aneinandergrenzende Auflageträger im Längsschnitt
- Fig. 7: ein Ableitungsgerinne im Querschnitt
- Fig. 8: den Anschluß eines Auflageträgers mit Fließgerinne an einem Ableitungsgerinne
- Fig. 9: einen Pumpensumpf im Längsschnitt
- Fig. 10: die Anordnung der Überdachung auf einer Deponieoberfläche in Draufsicht
- Fig. 11: eine Abwandlung der Anordnung gemäß Figur 10
- Fig. 12: die Anordnung der Überdachung während unterschiedlicher Auffüllungsphasen der Deponie.

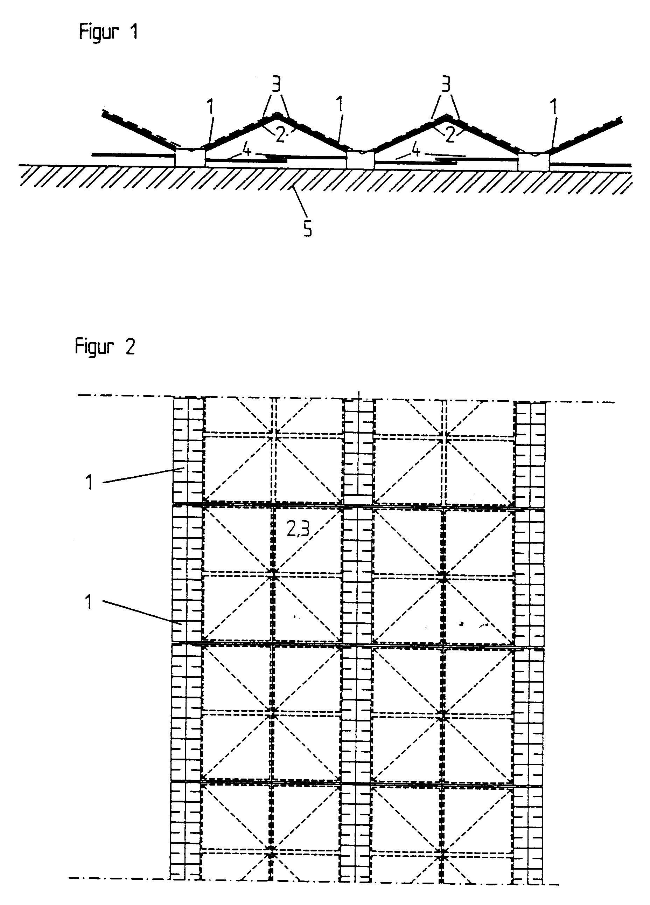

Fig. 1 zeigt im Querschnitt den prinzipiellen Aufbau der Dachkonstruktion. Mit Abstand parallel zueinander verlegte Auflagerträger 1 dienen als Auflage für Dachelemente 2, die gitterförmig den Zwischenraum zwischen Auflagerträgern überdecken. Die Abdichtung erfolgt durch eine auf die Dachelemente gelegte Dachhaut 3. Die Auflagerträger 1 sind durch einstellbare Distanzhalter 4 miteinander verbunden und liegen auf der Schüttebene 5 der Deponie auf.

Wie aus Fig. 2 ersichtlich ist, werden die Auflagerträger 1 mit den Dachelementen 2 in Reihen nebeneinander angeordnet, so daß parallel verlaufende Giebeldächer gebildet werden. Durch die Länge und den gegenseitigen Abstand der Auflagerträger ergeben sich dabei rechteckige Raster, wobei die Länge eines Auflagerträgers beispielsweise 6 Meter betragen kann. Der Abstand kann mit Hilfe der Distanzhalter gewählt werden und zum Beispiel bei einer vorgegebenen Mindestdachneigung von 10° ebenfalls 6 Meter betragen.

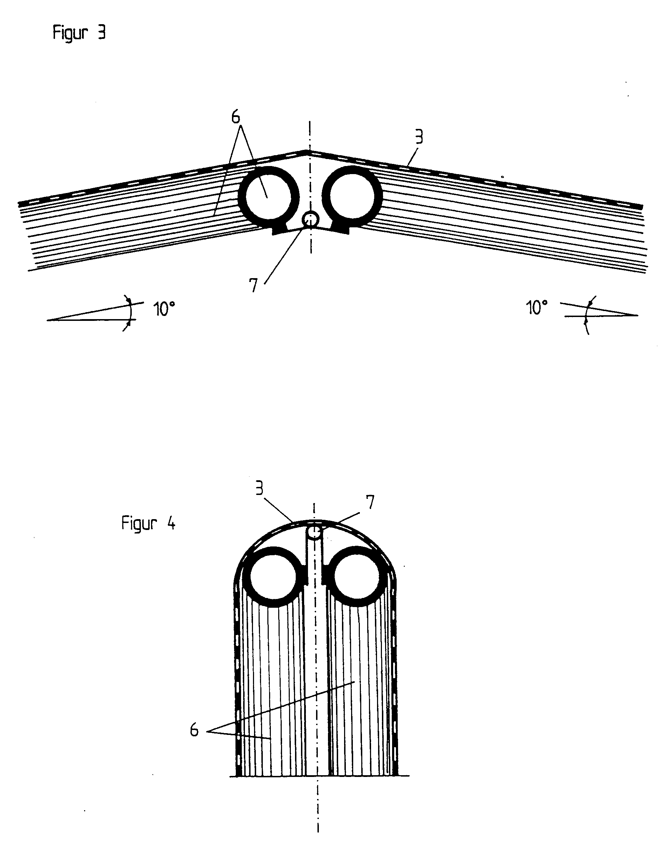

Jedes Dachelement 2 wird gemäß Fig. 3 und 4 von zwei umlaufend geschlossenen Profilrahmen 6 gebildet, die an einer Längsseite durch ein übliches Scharnier 7 gelenkig miteinander verbunden sind. Die Profilrahmen können als Rohr- oder Rechteckprofile aus Stahl oder Aluminium gebildet werden. Auch die Verwendung von Kunststoffprofilen ist möglich. Je nach Art der verwendeten Profile und nach den aufzunehmenden Belastungen können die Dachelemente auch mit Diagonalaussteifungen oder mit Mittelstreben verstärkt werden, wie es in Fig. 2 angedeutet ist.

Die Dachhaut 3 besteht aus kunststoffbeschichtetem Textilgewebe, zum Beispiel Markisen-, oder Planenmaterial. Sie wird an dem Dachelement mittels Seil/Ösenverschluß, Industrie-Druckknöpfen, Schnellverbindern mit Ösen, Klettverschlüßen oder dergleichen befestigt. Die aneinandergereihten Dachelemente stoßen in Längsrichtung stumpf aneinander, wobei die Stoßfugen durch Überlappungen der Dachhaut abgedichtet werden.

Die aufgrund des Profilrahmens eigenstabilen Dachelemente bieten ferner die Möglichkeit zur Befestigung von Solarelementen, mit deren Hilfe die für den Betrieb der Pumpen notwendige elektrische Energie erzeugt bzw. zusätzlich Energie gewonnen werden kann. Die Solarelemente werden von Tragarmen aufgenommen, die zweckmäßigerweise die Flächenabmessungen haben, wie die Profilrahmen der Dachelemente. Die Montage der Tragrahmen erfolgt mit Hilfe von Gewindebolzen und Distanzhülsen durch die Dachhaut hindurch an dem Profilrahmen, wobei die Dachhaut an den Durchdringungsstellen in geeigneter Weise verstärkt wird.

Die Auflagerträger 1 weisen gemäß Fig. 5 einen kastenförmigen Querschnitt auf. An den beiden oberen Rändern liegen in Ausnehmungen die Dachelemente 2 auf und sind dort in geeigneter Weise, zum Beispiel durch Rohrschellen befestigt. Die Dachhaut 3 ist bis über eine Öffnung geführt, die in der oberen Fläche des Auflagerträgers ausgebildet und durch einen Gitterrost 8 abgedeckt ist. Dieser hält größere Gegenstände zurück und ermöglicht ein Begehen der Auflagerträger. Im Inneren des Auflagerträgers ist ein Fließgerinne 9 mit dreieckförmigem Querschnitt angeordnet, dessen tiefster Punkt oberhalb des Bodens des Auflagerträgers liegt und dort Öffnungen 10 aufweist. Der darunter befindliche Querschnittsbereich des Auflagerträgers bildet einen ständig mit Wasser gefüllten Flutraum 11, der dem Auflagerträger das nötige Gewicht verleiht. Im Bedarfsfall können auch andere bzw. zusätzliche Ballaststoffe eingefüllt werden.

Von den Dachelementen 2 zulaufendes Niederschlagswasser gelangt in das Fließgerinne 9, wobei in Folge der Dreieckform auch geringe Zulaufmengen sicher abgeleitet werden. Bei starken Zuflüssen steigt der Wasserspiegel in dem Fließgerinne und infolge des statischen Druckausgleichs durch die Öffnungen 10 auch in dem Flutraum 11 an, wobei dieser Querschnittsbereich auch eine Staureserve bildet.

Wenn die erfindungsgemäße Überdachungskonstruktion auf Klär- bzw. Schlammdeichen abgesetzt werden soll, werden die Fluträume 11 frei von Wasser oder anderem Ballast gehalten, und in dem Fließgerinne sind keine Öffnungen vorhanden bzw. vorhandene Öffnungen verschlossen. Die Auflagerträger bilden dann Schwimmkörper für die Dachkonstruktion.

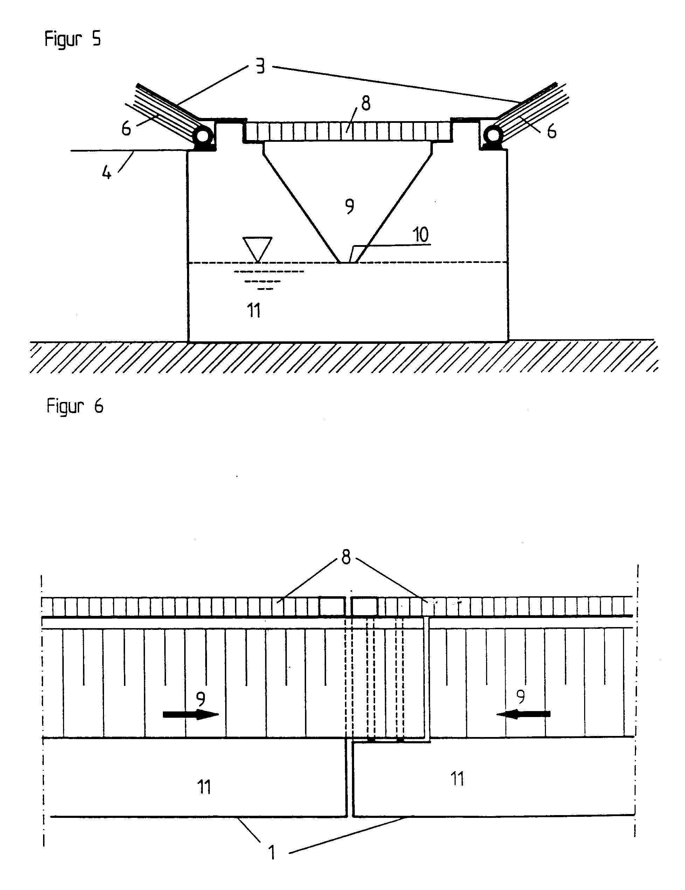

Die Querschnittsabmessungen der Auflagerträger liegen in der Größenordnung von ca. 0,6 x 0,4 Metern; die Trägerlänge beträgt, wie bereits erwähnt, in Übereinstimmung mit der Länge der Dachelemente etwa 6 Meter. In Längsrichtung hintereinander gelegte Auflagerträger stoßen, wie aus Fig. 6 ersichtlich, stumpf aneinander, so daß die Fluträume der einzelnen Auflagerträger nicht miteinander kommunizieren. Die Fließgerinne sind durch eine Steckverbindung, ähnlich einer Rohrverbindung mit Muffe und Spitzende, miteinander verbunden. Als Material für die Auflagerträger eignen sich besonders Kunststoffe, zum Beispiel glasfaserverstärkter Kunststoff (GFK), jedoch kommen auch andere Materialien in Frage. Soweit erforderlich können auch Aussteifungskonstruktionen vorgesehen werden.

Die Distanzhalter 4 werden in üblicher Weise als Seil- bzw. Stangenkonstruktion hergestellt und übernehmen die Sicherung der Auflagerträger untereinander in der vorbestimmten Lage.

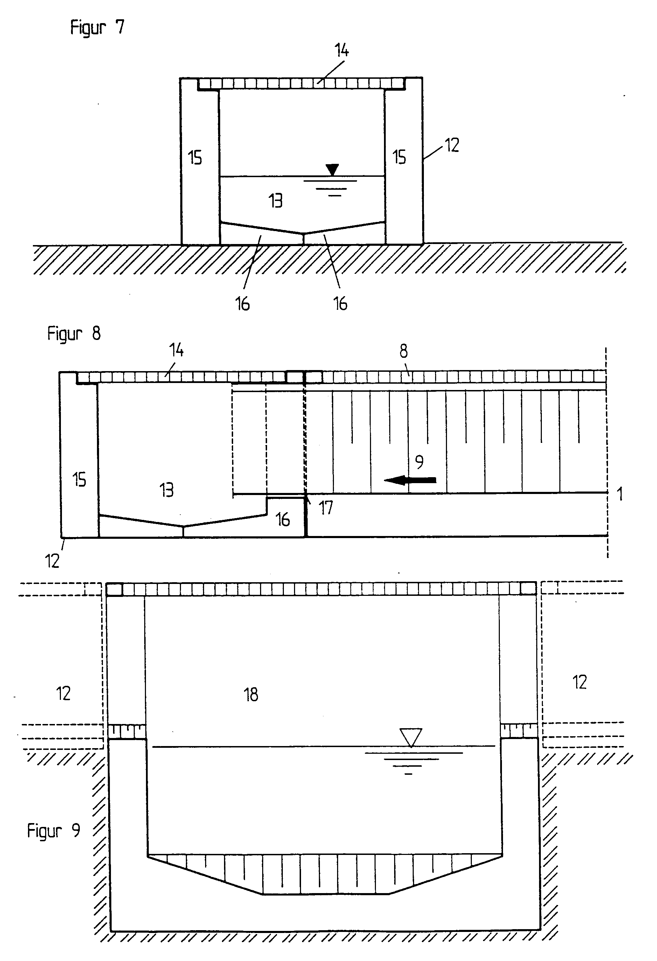

Aus den Fließgerinnen 9 mehrerer nebeneinanderliegender Reihen von Auflagerträgern wird das Wasser einem Ableitungsgerinne 12 überführt, daß in Fig. 7 im Querschnitt gezeigt ist. Das Ableitungsgerinne 12 weist einen größeren Fließquerschnitt 13 als die Fließgerinne auf und ist ebenfalls durch einen Gitterrost 14 abgedeckt. In der Wand und im Boden des vorzugsweise aus Kunststoffmaterial hergestellten Ableitungsgerinnes sind Hohlräume 15, 16 ausgebildet, die mit Ballast, zum Beispiel Wasser, gefüllt werden. Mit nicht gefüllten Ballasträumen können die Ableitungsgerinne in gleicher Weise wie die Auflagerträger auch als Schwimmkörper eingesetzt werden. Die Ableitungsgerinne werden quer zum Verlauf der Auflagerträger verlegt, welche stumpf gegen die Ableitungsgerinne stoßen und mit ihrem Fließgerinne durch eine profilierte Aussparung 17 in der Seitenwand der Ableitungsgerinne mit diesen verbunden sind, wie es in Fig. 8 dargestellt ist.

Der Zulauf mehrerer Ablaufgerinne wird in einem Pumpensumpf gesammelt und von dort abgepumpt. Wie aus Fig. 9 ersichtlich, ist der Pumpensumpf 18 als relativ einfacher Hohlkörper vorzugsweise aus Kunststoffmaterial hergestellt. Die Ableitungsgerinne 12 sind über seitliche Aussparungen angeschlossen. Die Grundrißabmessungen von ca. 0,6 x 1,0 Metern ermöglichen einen problemlosen Anschluß und erfordern nur geringe Erdarbeiten, so daß die Verlegung ohne großen Aufwand möglich ist. Die Oberseite ist ebenfalls mit einem Gitterrost abgedeckt.

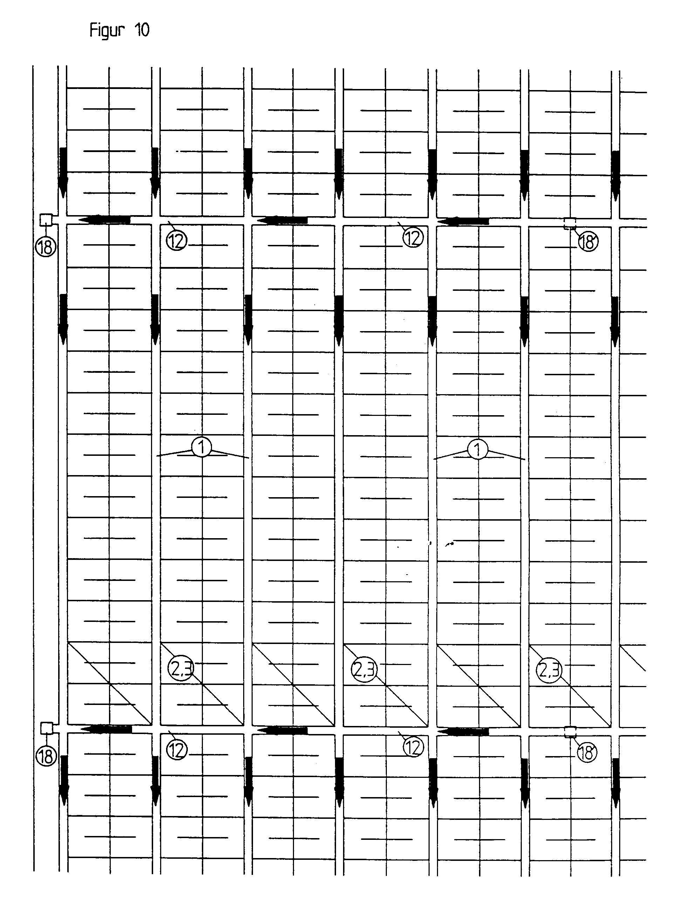

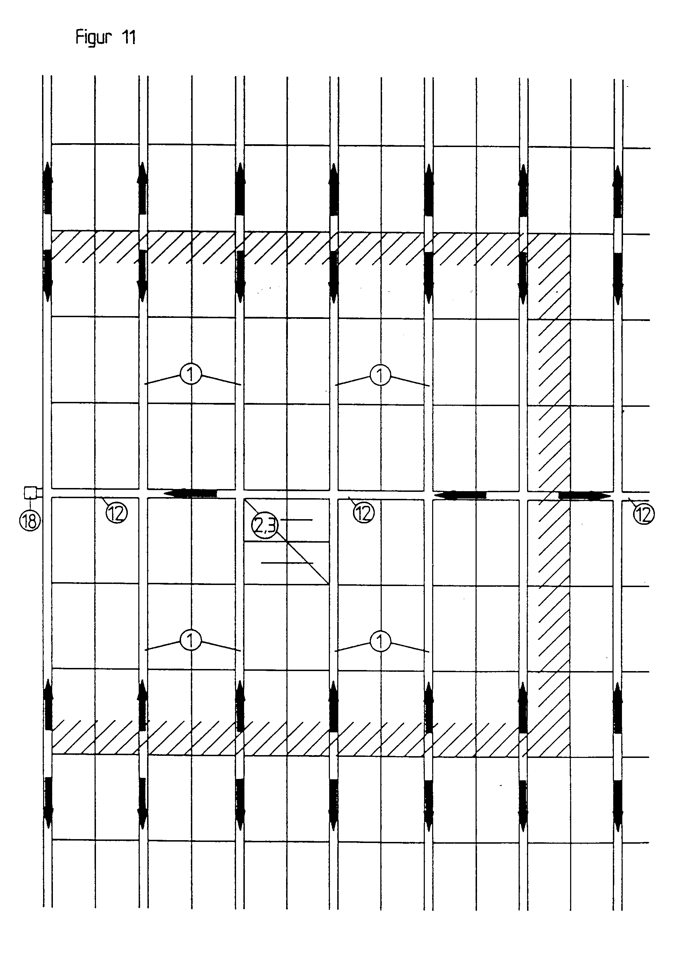

Die Fig. 10 und 11 zeigen zwei mögliche Varianten für die Verlegung der Überdachungskonstruktion, wobei die Fließrichtung des abgeleiteten Wassers durch Pfeile angedeutet ist. In der Darstellung von Fig. 10 weisen sämtliche Fließgerinne 1 ein von oben nach unten gerichtetes Gefälle auf. Jeweils sechs hintereinander angeordnete Fließgerinne münden in ein Ableitungsgerinne 12, das das Wasser in der Zeichnung nach rechts zu einem Pumpensumpf weiterleitet. Je nach den gegebenen Verhältnissen kann in dem Ableitungsgerinne ein weiterer Pumpensumpf 18' zwischengeschaltet sein. Gemäß Fig. 11 wird das Wasser den Ableitungsgerinnen 12 beidseitig von den Fließgerinnen zugeführt. Der gestrichelt eingerahmte Bereich zeigt dabei die dem Pumpensumpf 18 zugeordnete Entwässerungsfläche. Je nach den örtlichen Gegebenheiten, insbesondere den unterschiedlichen Gefälleverhältnissen, sind natürlich weitere Abwandlungen in der Führung des Niederschlagswassers möglich.

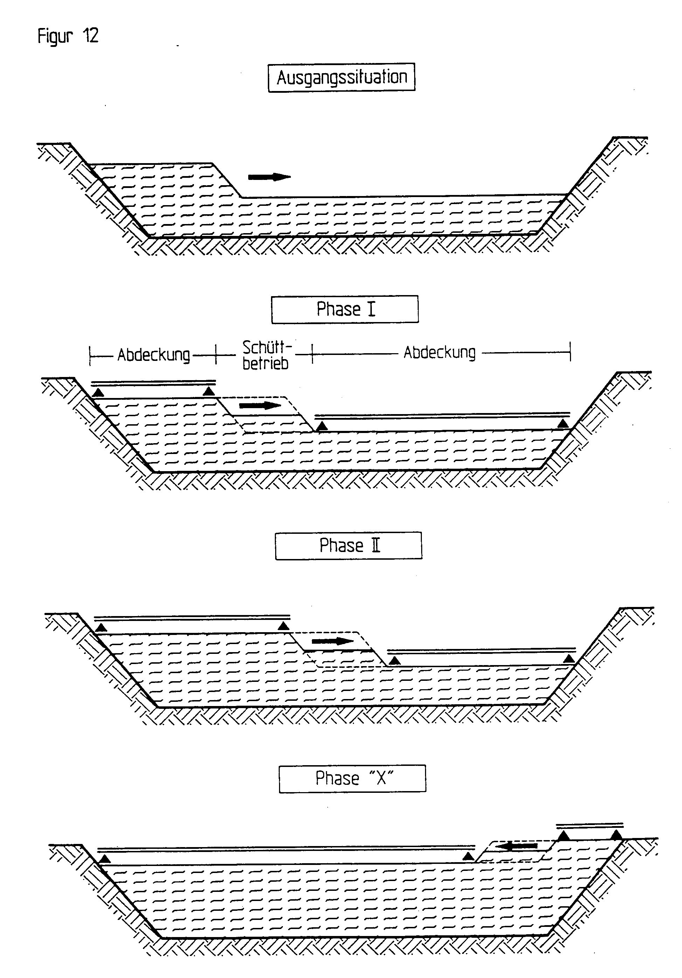

In Fig. 12 ist schematisch dargestellt, wie die erfindungsgemäße Überdachungskonstruktion im Verlauf des Auffüllens einer Deponie eingesetzt werden kann. Wie ersichtlich, ist immer nur der schmale Bereich, in dem gerade die Aufschüttung erfolgt, frei von einer Überdachung, während der größte Teil abgedeckt ist, ohne daß es einer aufwendigen, die gesamte Deponie überspannenden Dachkonstruktion bedarf. Sofern es für erforderlich erachtet wird, könnte auch der verbleibende freie Bereich durch eine leichte behelfsmäßige Konstruktion überdacht werden.

### BEZUGSZEICHENLISTE

- 1: Auflagerträger
- 2: Dachelement
- 3: Dachhaut
- 4: Distanzhalter
- 5: Schüttebene
- 6: Profilrahmen
- 7: Scharnier
- 8: Gitterrost
- 9: Fließgerinne
- 10: Öffnung
- 11: Flutraum
- 12: Ableitungsgerinne
- 13: Fließquerschnitt
- 14: Gitterrost
- 15: Hohlraum
- 16: Hohlraum
- 17: Öffnung
- 18: Pumpensumpf
- 18': zwischengeschalteter Pumpensumpf

## Patentansprüche

1. Ortsveränderliche Überdachung für Deponien mit die Deponiefläche überspannenden, im Grundriß recht-eckigen Dachelementen, die Auflagerkanten aufweisen und mit diesen auf Auflagerträgern aufliegen, wobei die Dachelemente hintereinander und in Reihen nebeneinander angeordnet sind, **dadurch gekennzeichnet**, **daß** die Auflagerträger (1) auf der Oberfläche (5) der geschütteten Deponie flächig auflegbar und ballastierbar sind, und daß die Dachelemente (2) an ihren Auflagerkanten mit den Auflagerträgern (1) verbunden sind.

2. Überdachung nach Anspruch 1, **dadurch gekennzeichnet**, daß jedes Dachelement (2) zwei rechteckige Profilrahmen (6) aufweist, die an einer Längsseite gelenkig verbunden sind und ein Giebeldach mit einstellbarem Neigungswinkel bilden.

3. Überdachung nach Anspruch 2, **dadurch gekennzeichnet**, daß die Profilrahmen (6) der Dachelemente (2) aus Rohr- oder Rechteckprofilen bestehen.

4. Überdachung nach Anspruch 3, **dadurch gekennzeichnet**, daß die Profilrahmen (6) aus Metall, insbesondere aus Stahl bestehen.

5. Überdachung nach Anspruch 3, **dadurch gekennzeichnet**, daß die Profilrahmen (6) aus Kunststoff bestehen.

6. Überdachung nach einem der Ansprüche 2 bis 5, **dadurch gekennzeichnet**, daß auf den Profilrahmen (6) des Dachelements (2) eine Dachhaut (3) aus flexiblem, wasserfestem Material befestigt ist.

7. Überdachung nach einem der Ansprüche 1 bis 6, **dadurch gekennzeichnet**, daß die Auflagerträger (1) hohl sind und einen in der Außenkontur rechteckigen Querschnitt aufweisen, und daß an den oberen Längskanten Ausnehmungen zur Aufnahme der Auflagerkanten der Dachelemente (2) vorgesehen sind.

8. Überdachung nach Anspruch 7, **dadurch gekennzeichnet**, daß der Auflagerträger (1) im Inneren ein Fließgerinne (9) aufweist.

9. Überdachung nach Anspruch 8, **dadurch gekennzeichnet**, daß das Fließgerinne (9) einen dreieckförmigen Querschnitt hat, dessen Spitze mit Abstand oberhalb des Bodens des Auflagerträgers (1) liegt.

10. Überdachung nach Anspruch 9, **dadurch gekennzeichnet**, daß das Fließgerinne (9) in der unteren Spitze des dreieckförmigen Querschnitts Öffnungen (10) aufweist.

11. Überdachung nach einem der Ansprüche 7 bis 10, **dadurch gekennzeichnet**, daß auf der Oberseite des Auflagerträgers (1) ein Gitterrost (8) angeordnet ist.

12. Überdachung nach einem der Ansprüche 7 bis 11, **dadurch gekennzeichnet**, daß an den Enden der Auflagerträger (1) eine Steckverbindung für die Fließgerinne (9) ausgebildet ist, und daß die hintereinander angeordneten Auflagerträger (1) mit ihrem verbleibenden Querschnittsbereich stumpf aneinanderstoßen.

13. Überdachung nach einem der Ansprüche 7 bis 12, **dadurch gekennzeichnet**, daß die Auflagerträger (1) aus Kunststoff, insbesondere aus glasfaserverstärktem Kunststoff bestehen.

14. Überdachung nach einem der vorhergehenden Ansprüche, **dadurch gekennzeichnet**, daß sie mindestens ein Ableitungsgerinne (12) aufweist, in das bzw. die seitlich mehrere Fließgerinne (9) der Auflagerträger (1) münden.

15. Überdachung nach Anspruch 14, **dadurch gekennzeichnet**, daß die Ableitungsgerinne (12) einen rechteckförmigen Querschnitt aufweisen, wobei der Fließquerschnitt (13) größer ist als der der Fließgerinne (9).

16. Überdachung nach Anspruch 14 oder 15, **dadurch gekennzeichnet**, daß auf der Oberseite des Ableitungsgerinnes (12) ein Gitterrost (14) angeordnet ist.

17. Überdachung nach einem der Ansprüche 14 bis 16, **dadurch gekennzeichnet**, daß in der Seitenwand des Ableitungsgerinnes (12) mindestens eine Öffnung (17) vorgesehen ist, die an den Querschnitt des Fließgerinnes (9) angepaßt ist.

18. Überdachung nach einem der Ansprüche 14 bis 17, **dadurch gekennzeichnet**, daß in den Seitenwänden und im Boden des Ableitungsgerinnes (12) Hohlräume (15, 16) zur Aufnahme von Ballast ausgebildet sind.

19. Überdachung nach einem der Ansprüche 14 bis 18, **dadurch gekennzeichnet**, daß das Ableitungsgerinne (12) aus Kunststoff, insbesondere aus glasfaserverstärktem Kunststoff besteht.

20. Überdachung nach einem der vorhergehenden Ansprüche, **dadurch gekennzeichnet**, daß sie mindestens einen Pumpensumpf (18) aufweist, in den ein oder mehrere Ableitungsgerinne (12) münden.

21. Überdachung nach Anspruch 20, **dadurch gekennzeichnet**, daß der Pumpensumpf (18) als oben offener Hohlkörper mit rechteckigem Grundriß und dem Querschnitt der Ableitungsgerinne (12) angepaßten Seitenabmessungen und - gestaltungen ausgebildet ist.

22. Überdachung nach Anspruch 20 oder 21, **dadurch gekennzeichnet**, daß die Oberseite des Pumpensumpfes (18) durch einen Gitterrost abgedeckt ist.

23. Überdachung nach einem der Ansprüche 20 bis 22, **dadurch gekennzeichnet**, daß der Pumpensumpf (18) aus Kunststoff, inbesondere aus glasfaserverstärktem Kunststoff besteht.

24. Überdachung nach einem der vorhergehenden Ansprüche, **dadurch gekennzeichnet**, daß auf den Dachelementen (2) Tragrahmen zur Aufnahme von Solarzellen befestigt sind.

## Claims

1. A movable roof for waste dumps comprising roof elements which are rectangular in plan view and span the surface of the dump and have bearing edges which rest on supports, the roof elements being disposed one behind the other and in rows alongside one another, characterised in that the supports (1) can be laid flat and ballasted on the surface (5) of the heaped waste material, and in that the bearing edges of the roof elements (2) are connected to the supports (1).

2. A roof according to claim 1, characterised in that each roof element (2) has two rectangular sectional frames (6) which are pivotably connected at one longitudinal side and form a gable roof with an adjustable angle of inclination.

3. A roof according to claim 2, characterised in that the sectional frames (6) of the roof elements (2) are made up from tubular or rectangular section members.

4. A roof according to claim 3, characterised in that the sectional frames (6) are of metal, more particularly steel.

5. A roof according to claim 3, characterised in that the sectional frames (6) are of plastics.

6. A roof according to any of claims 2 to 5, characterised in that a roof membrane (3) of flexible water-resistant material is secured to the sectional frame (6) of the roof element (2).

7. A roof according to any of claims 1 to 6, characterised in that the supports (1) are hollow and have a cross-section which is rectangular in outer contour, and in that the upper longitudinal edges are formed with recesses for receiving the bearing edges of the roof elements (2).

8. A roof according to claim 7, characterised in that the supports (1) have an internal gutter (9).

9. A roof according to claim 8, characterised in that the gutter (9) has a triangular cross-section with its corner at a distance above the base of the support (1).

10. A roof according to claim 9, characterised in that the gutter (9) has openings (10) in the bottom corner of the triangular cross-section.

11. A roof according to any of claims 7 to 10, characterised in that a grating (8) is disposed on the top surface of the support (1).

12. A roof according to any of claims 7 to 11, characterised in that a push-in connection for the gutter (9) is formed at the ends of the supports (1), and in that the remaining cross-sectional regions of the supports (1), which are disposed one behind the other, abut one another flush.

13. A roof according to any of claims 7 to 12, characterised in that the supports (1) are made of plastics, more particularly glass fibre-reinforced plastics.

14. A roof according to any of the preceding claims, characterised in that it has at least one drainage channel (12) into which the gutter or gutters (9) in the supports (1) open from the sides.

15. A roof according to claim 14, characterised in that the drainage channel (12) has a rectangular cross-section, its flow cross-section (13) being greater than that of the gutter (9).

16. A roof according to claim 14 or 15, characterised in that a grating (14) is disposed on the top surface of the drainage channel (12).

17. A roof according to any of claims 14 to 16, characterised in that the side wall of the drainage channel (12) is formed with at least one opening (17) adapted to the cross-section of the gutter (9).

18. A roof according to any of claims 14 to 17, characterised in that the side walls and base of the drainage channel (12) are formed with cavities (15, 16) for receiving ballast.

19. A roof according to any of claims 14 to 18, characterised in that the drainage channel (12) is made of plastics, more particularly glass fibre-reinforced plastics.

20. A roof according to any of the preceding claims, characterised in that it has at least one pump sump (18), into which one or more drainage channels (12) open.

21. A roof according to claim 20, characterised in that the pump sump (18) is a hollow member open at the top and rectangular in plan view and with side dimensions and shapes adapted to the cross-section of the drainage channel (12).

22. A roof according to claim 20 or 21, characterised in that the top surface of the pump sump (18) is covered by a grating.

23. A roof according to any of claims 20 to 22, characterised in that the sump (18) is made of plastics, more particularly glass fibre-reinforced plastics.

24. A roof according to any of the preceding claims, characterised in that frames for holding solar cells are secured to the roof elements (2).

## Revendications

1. Toit déplaçable pour décharges de déchets comportant des éléments de toit de section rectangulaire recouvrant la surface de la décharge de déchets, toit qui présente des bords d'appui, lesquels reposent sur des montants, les éléments de toit étant disposés en succession et en série côte à côte, caractérisé en ce que les montants de support (1) peuvent être fixés à la surface (5) de la décharge en vrac et être lestés et en ce que les éléments de toit (2) sont raccordés aux montants de support (1) par leurs extrémités d'appui.

2. Toit selon la revendication 1, caractérisé en ce que chaque élément de toit (2) présente deux châssis profilés rectangulaires (6) qui sont raccordés de façon articulée sur un côté longitudinal et forment un toit à pignon ayant un angle d'inclinaison variable.

3. Toit selon la revendication 2, caractérisé en ce que les châssis profilés (6) des éléments de toit (2) consistent en des profilés tubulaires ou rectangulaires.

4. Toit selon la revendication 3, caractérisé en ce que les châssis profilés (6) sont en métal, en particulier en acier.

5. Toit selon la revendication 3, caractérisé en ce que les châssis profilés (6) sont en matière synthétique.

6. Toit selon l'une des revendications 2 à 5, caractérisé en ce qu'une membrane de toit (3) en un matériau souple, étanche à l'eau est fixée sur le châssis profilé (6) de l'élément de toit (2).

7. Toit selon l'une des revendications 1 à 6, caractérisé en ce que les montants de support (1) sont creux et présentent une section transversale rectangulaire dans leur contour extérieur et en ce que sur leurs bords longitudinaux supérieurs sont ménagés des évidements destinés à recevoir les bords d'appui des éléments de toit (2).

8. Toit selon la revendication 7, caractérisé en ce que les montants de support (1) présentent une goulotte d'écoulement (9) dans leur partie intérieure.

9. Toit selon la revendication 8, caractérisé en ce que la goulotte d'écoulement (9) possède une section transversale triangulaire dont le sommet se situe à une certaine distance au-dessus de la base du montant de support (1).

10. Toit selon la revendication 9, caractérisé en ce que la goulotte d'écoulement (9) présente des ouvertures (10) dans le sommet inférieur de la section transversale triangulaire.

11. Toit selon l'une des revendications 7 à 10, caractérisé en ce qu'un caillebotis (8) est disposé sur le côté supérieur du montant de support (1).

12. Toit selon l'une des revendications 7 à 11, caractérisé en ce que sur les extrémités du montant de support (1) est formée une liaison enfichable pour la goulotte d'écoulement (9) et en ce que les montants de support (1) disposés les uns derrière les autres sont assemblés bout-à-bout dans leur section transversale restante.

13. Toit selon l'une des revendications 7 à 12, caractérisé en ce que les montants de support sont en matière synthétique, en particulier en matière synthétique renforcée par des fibres de verre.

14. Toit selon l'une des revendications précédentes, caractérisé en ce qu'il comporte au moins une goulotte de dérivation (12) dans laquelle débouchent les goulottes d'écoulement (9) latéralement des montants de support (1).

15. Toit selon la revendication 14, caractérisé en ce que la goulotte de dérivation (12) présente une section transversale rectangulaire, la section transversale d'écoulement (13) étant supérieure à la goulotte d'écoulement (9).

16. Toit selon la revendication 14 ou 15, caractérisé en ce qu'un caillebotis (14) est disposé sur le côté supérieur de la goulotte de dérivation (12).

17. Toit selon l'une des revendications 14 à 16, caractérisé en ce que dans la paroi latérale de la goulotte de dérivation (12) est prévue au moins une ouverture (17) qui est adaptée à la section transversale de la goulotte d'écoulement (9).

18. Toit selon l'une des revendications 14 à 17, caractérisé en ce que dans les parois latérales et dans le fond de la goulotte de dérivation (12) sont formées des cavités (15, 16) destinées à recevoir le lest.

19. Toit selon l'une des revendications 14 à 18, caractérisé en ce que la goulotte de dérivation (12) est en matière synthétique, en particulier en matière synthétique renforcée par des fibres de verre.

20. Toit selon l'une des revendications précédentes, caractérisé en ce qu'il présente au moins un puisard de pompe (18) dans lequel débouchent une ou plusieurs goulottes de dérivation (12).

21. Toit selon la revendication 20, caractérisé en ce que le puisard de pompe (18) est réalisé sous forme de corps creux ouvert sur le dessus avec une section de base rectangulaire et des conformations et dimensions latérales adaptées à la section transversale de la goulotte de dérivation (12).

22. Toit selon la revendication 20 ou 21, caractérisé en ce que le côté supérieur du puisard de pompe (18) est recouvert d'un caillebotis.

23. Toit selon l'une des revendications 20 à 22, caractérisé en ce que le puisard de pompe (18) est réalisé en matière synthétique, en particulier en matière synthétique ou plastique renforcée par des fibres de verre.

24. Toit selon l'une des revendications précédentes, caractérisé en ce que des châssis de support destinés à recevoir des cellules solaires sont fixés sur les éléments de toit (2).
